Europäisches Patentamt

European Patent Office

Office européen des brevets

(19)

(11) Publication number: **0 194 757 B1**

# EUROPEAN PATENT SPECIFICATION

(12)

(45) Date of publication of patent specification: **15.05.91** (51) Int. Cl.⁵: **C08J 9/28, C08L 63/00**

(21) Application number: **86301004.7**

(22) Date of filing: **13.02.86**

(54) Manufacture of porous resin molded product, and casting mold of porous resin.

(30) Priority: **13.02.85 JP 27239/85**

(43) Date of publication of application:
**17.09.86 Bulletin 86/38**

(45) Publication of the grant of the patent:
**15.05.91 Bulletin 91/20**

(84) Designated Contracting States:
**AT BE CH DE FR GB IT LI NL**

(56) References cited:
**EP-A- 0 025 139**
**US-A- 3 945 964**
**US-A- 4 464 485**

**CHEMICAL ABSTRACTS, vol. 83, no. 8, 25
Aug 1975, Columbus, OH (US); p. 90, no.
60480e**

**CHEMICAL ABSTRACTS, vol. 83, no. 22, 01
Dec 1975, Columbus, OH (US); p. 71, no.
180505p**

(73) Proprietor: **INAX CORPORATION**
**6 Koiehonmachi 3-chome**
**Tokoname-Shi Aichi(JP)**

Proprietor: **I.N. Technical Lab. Co., Ltd.**
**29, Keihan Hondouri 2**
**Moriguchi Osaka 570(JP)**

(72) Inventor: **Inoue, Saihachi**
**29 Keihan Hondouri 2**
**Moriguchi Osaka 570(JP)**
Inventor: **Kiriyama, Shigeru**
**7-4585, Bessho Honmachi 17**
**Takatsuki Osaka 569(JP)**
Inventor: **Imada, Kazuhiro**
**10-12 Satsukino 1 Miharacho**
**Minamikawachi-gun, 587(JP)**

(74) Representative: **Geering, Keith Edwin et al**
**REDDIE & GROSE 16 Theobalds Road**
**London WC1X 8PL(GB)**

**Description**

The invention relates to the manufacture of porous resin molded products containing continuous holes, and to a casting mold suitable for slip discharge casting.

Molded porous resin products containing continuous holes have generally been used for filtering and gas dispersion, and as molds. In making such porous resin molded products for use as filter media, accurate reproduction of pore diameter and porosity is essential, whilst the products should meet fully the important requirements for good mechanical properties, dimensional stability, and durability.

All prior manufacturing methods for porous resin products containing continuous holes have been unsatisfactory. In a method which uses inorganic Powder, for example, the molded product is very brittle and is often chipped or cracked during release from the mold. As they require high temperature baking, large sized products are cracked in almost all cases. In a metal powder baking method, even dispersion of metal powder is difficult and pore diameter and porosity tend to be locally inhomogeneous due to transfer and gathering of the metal powder during baking. This makes it hard to reproduce the pore diameter and porosity with high accuracy. A method which uses plaster or cement is very handy as a molded product can be made by casting. Accordingly, plaster is used popularly as a material for producing porous resin molded products containing continuous pores. Molded products made by using a material reactive to hydration such as plaster and cement, however, have such problems as low durability and low resistance to chemicals. To solve the problems, an improved method using addition of synthetic resin or synthetic resin emulsion has been studied. As even dispersion of synthetic resin or the emulsion is difficult the improved method is still subject to major troubles such as inferior reproduction of pore diameter and porosity, and contraction of the product.

Besides the manufacturing methods mentioned above, another process which uses an epoxy resin water dispersion system is shown in Japanese Patent Publication No. 53-2464. Aliphatic polyamide is used as the hardener, and a molding material of high fluidity is not obtained unless dispersed with a large quantity of water. Accordingly, a long curing time from casting to release is required and the mold is greatly contracted during heating and evaporation, which causes a serious problem in dimensional stability. When a filler is added for adjustment of the molding mixture to solve the problem, fluidity of the mixture is lowered making casting difficult, the mechanical characteristics of the obtained molded product are lowered, and the weight is also increased. Accordingly, the method is applicable to manufacturing molded products of limited shapes and dimensions only.

An improved version of the method of Japanese Patent Publication No. 53-2464 is also shown in Provisional Publication No. 59-71339. The improved method is characterised by aliphatic polyamide (the condensation product of mono-fatty acid and amine) used in addition to the polymerised aliphatic polyamide used as the hardener in Publication No.53-2464, so as to obtain porous material containing continuous holes of a desired average pore diameter. As the condensation product of fatty acid and amine is used as hardener, as mentioned above, the epoxy resin slip used with these kinds of hardeners must be a water in oil type of emulsion in order to obtain a slip viscosity suitable for casting and accordingly, the added quantity of water reaches a high percentage of the epoxy resin slip. Thus the curing time is extended and the cured product is greatly contracted, which causes a serious problem in dimensional stability. The problem of producing continuous holes with high reproduction accuracy is left unsolved.

In Japanese Patent Publication No. 51-46131, a manufacturing method is disclosed which is characterised by use of epoxy resin and a specific single emulsifier. As is seen later in the Comparison Examples, this method has a problem of uneven pore diameter due to unstable dimensions of the obtained porous molded material. When a filler is added water is released in the middle of curing because the single emulsifier does not function to stabilise the emulsion solution.

Japanese Patent Publication No. 55-19723 shows a method using polymethyl methacrylate in powder form for emulsion polymerisation. This method is also subject to such problems as contraction due to unstable dimensions of the molded product, and lower mechanical properties and heat resistance than the method with epoxy resin. The description of this manufacturing process includes no embodiment where any filler is used.

Slip discharge casting is a method for making hollow molded products. Slip is supplied into the cast space of the casting mold which can be separated and has continuous pores, the slip is pressed to discharge water contained in the slip to the outside of the casting mold, and the solid matter is deposited inside the casting mold. Then the casting mold is separated to obtain a hollow molded product. If the casting mold for this method is made of plaster, both the durability and the resistance to chemicals are inferior. If the mold is made by the method of Japanese Patent Publication No. 53-2464, on the other hand, the probelm of unstable dimensions results. For manufacturing molded products neither method is favourable and more suitable casting molds for slip discharge casting have been needed.

The present invention provides a process for obtaining a porous resin molded product containing continuous holes characterised by using as the molding material a mixture which contains epoxy compound having one or more epoxy groups in each molecule; hardener which reacts with and hardens the epoxy compound; at least two types of nonionic emulsifier selected from the three types having respective hydrophilic-lipophilic balances of 4-8, 8-17, and 11-15.6; water or aqueous surface active agent; and filler.

The process according to the invention can yield cast molded products with uniform and continuous pores and excellent dimensional stability, mechanical properties, and durability. The products can be used for filtering and gas dispersion and for molds or mold parts.

The invention also provides a mold suitable for slip discharge casting and obtained by the above-defined process according to the invention, preferably using a said molding material which contains 20 - 50 parts by weight of hardener per 100 parts by weight of epoxy compound, 30 parts by weight or less of emulsifier and 1 - 200 parts by weight of water or aqueous surface active agent to 100 parts by weight in total of epoxy compound and hardener; and 30-75 weight percent of filler. such a slip discharge mold can have uniform and continuous pores, excellent dimensional stability and mechanical properties, durability, and resistance to water.

In the accompanying drawings:

FIGURE 1 is a sectional view of a part of a slip discharge casting mold;

FIGURES 2 and 3 are sectional views to explain an embodiment of a molding method using the slip casting mold of Fig. 1; and

FIGURE 4 is perspective view showing a discharge channel fixed onto a molded wire net.

As epoxy compounds for use in the invention diglycidyl ethers of bisphenol A type and bisphenol F type are generally considered favourable. where products of high resistance to chemicals and heat are required, in particular, it is advisable to use polyfunctional epoxy resins such as polyglycidyl ethers derived from phenolic novolaks or from cresol novolaks or triglycidyl ethers of trimethylol propane (TMP)-vinylcylohexane dioxide, glycidyl esters from such acid anhydrides as tetrahydro-phthalic anhydride (THPA), and hexahydro-phthalic acid (HHPA), or heterocyclic epoxy resins such as the epoxy resins of hydantoin base. As epoxy compounds for flexibility or viscosity control, mono- or diglycidyl ethers or esters generally called reactive diluents or plastic epoxy resins (such as fatty glycidyl ethers represented by butyl glycidyl ether, aromatic glycidyl ethers such as cresyl glycidyl ether (CCE), phenyl glycidyl ether, glycidyl ethers derived from high grade alcohol and glycol, and glycidyl esters derived from fatty acids) may be used. Where products of particularly high incombustibility are required, epoxy resins which contain Br in the molecule may be used such as tetrabromo bisphenol A diglycidyl ether and dibromo phenyl (or cresyl) glycidyl ether.

In the process of the present invention, an epoxy compound such as one mentioned above may be used alone or any two or more may be used together as required. The epoxy component is referred to hereinafter as the resin component.

Suitable hardeners for use in the invention include aliphatic polyamines such as diethylene triamine (DETA), triethylene tetraamine (TETA), m-xylylene diamine (m-XDA) and trimethyl hexamethylene diamine (TMD); alicyclic polyamines such as isophorone diamine (IPD), N-aminoethyl piperazine and imidazole compounds, aromatic polyamines such as diaminodiphenyl methane (DDM), diamino diphenyl sulfone (DADPS) and m-phenylenediamine, and polyamides such as the polycondensates of acids and polyamines.

Such compounds may be used alone or two or more may be used together; polymers, polycondensates, and adducts of these compounds (used singly or as a mixture of two or more thereof) with at least any one of formalin, acrylic acid, polyols, phenols, polyesters, oxides, mono- and di- and polyglycidyl ethers may be used as the hardener. Favourable hardeners are the adducts of amines or amides with glycidyl ethers and polyphenols, or the polycondensates with acids and formalin. The adducts of aliphatic polyamine, glycidyl ether, and polyphenol, of aliphatic polyamine, aromatic polyamine, glycidyl ether and polyphenol, and of dicyandiamide, aliphatic polyamine, glycidyl ether, and polyphenol are also suitable as hardeners for use in the present invention.

It is well known that epoxy resin mixtures can be emulsified by using an adequate quantity of selected emulsifier. To our knowledge, however, the object of the invention (to obtain molded products having uniform holes and porosity and excellent dimensional stability and mechanical stength) has not been realized by using any known single emulsifier such as the block copolymer of polyoxyethylene and polyoxypropylene (Newpol PE series of Sanyo Kasei, for example) disclosed in Japanese Patent Publication No. 51-46131. According to the present invention this object can be achieved by using at least two out of three types of nonionic emulsifier with respective hydrophilic-lipophilic balances (HLB) of 4-8, 8-17, and 11-15.6. Sorbitan aliphatic ester is a favourable example of 4-8 HLB emulsifier, polyoxyethylene oleyl ether is a good example of 8-17 HLB emulsifier, and polyoxyethylene sorbitan aliphatic ester is a desirable example of 11-15.6 HLB emulsifier. At least two of these types must be used together, and it is better to use all three types. It is preferred to use sorbitan aliphatic ester, polyoxyethylene oleyl ether, and polyoxyethylene sorbitan aliphatic ester together. In using the resin components and hardeners described above, it is most favourable to set the HLB of the compound emulsifier at 13 to 14.5. The hydrophilic-lipophilic balance of the emulsifier system used for the present invention contrasts with that (HLB 4-6.5) of the commonly accepted emulsifiers for preparation of water in oil type epoxy emulsions.

It is preferable that the emulsifier system used for the present invention has high storage stability even when conjugated with resin component and/or hardener, as the emulsifier is easier to use when mixed with the resin component and/or the hardener in advance.

The quantity of emulsifier to be added should preferably be 30 parts by weight or less per 100 parts of resin component and hardener, and 2 to 15 parts by weight are still better.

The quantity of water or aqueous surface active agent solution to be added for the present invention should preferably be 1-200 parts by weight per 100 parts of resin component and hardener, and 10-80 parts by weight are still better. Two component epoxy resin emulsions are subject to water release when too much filler is added, as the filler is coagulated or the colloid is broken quickly depending on the kind of filler. The phenomenon of water release encountered with some specific kinds of filler is publicly known and to prevent water release, surface active agent is used as required. The surface active agents of use for the present invention include not only the typical surfactants but also the agents for better dispersion of fillers such as dispersants of pigments in water. The surface active agent improves wetting of fillers by water and functions as a protective colloid. For this invention fluoro-surface active agents have been found most effective. Examples of fluoro series surface active agents are Ftergent® (ex. NEOS Company Limited), and Lodyne® (ex. CIBA-GEIGY). The quantity of surface active agent to be added may vary according to the quantity of filler, but 30 parts by weight or less to 100 parts by weight of water is preferable, and less than 10 parts by weight is still better. When the amount of filler has been decided, an appropriate quantity of surface active agent may be added preliminarily to the resin component or the hardener as required.

The type of filler, its particle size, and the quantity used are factors which affect the product characteristics, as is the quantity of water added. The type of filler used for the present invention is not particularly limited and can be a type ordinarily used for modification of synthetic resins. For example, silica sand, quartz sand, calcium carbonate, talc, barium sulfate, clay, aluminium hydroxide and pigments such as titanium oxide and chromic oxide may be used. Dolomite and ceramic powder may also be used. Inorganic fillers such as alumina, glass beads, pearl sand, and Ottawa sand, and organic fillers like phenol resin and epoxy resin spheres may be used. Fillers of certain particle size such as 250-150$\mu$m (60-100 mesh), 150-75$\mu$m (100-200 mesh), 75 50$\mu$m (200-300 mesh) or smaller than 50$\mu$m (300 mesh), and/or of spherical shape or similar shape are preferable. The above mentioned inorganic fillers such as alumina and Ottawa sand, and the organic fillers like phenol resin and epoxy resin spheres can be used. For molded products to which accurate pore diameter and porosity are essential, the object can be realised by using a single filler of predetermined range of particle size and of spherical or similar shape, or two or more such fillers together. The preferred quantity of filler to be added is 30-75 weight percent of all the mixture for molding.

The raw materials as described above are mixed to prepare the aqueous epoxy resin mixture, which is used for molding.

To extinguish the bubbles formed when the raw materials are stirred, a defoaming agent having defoaming or foam breaking function may be used as required. To make molded articles which have intricate and detailed surface patterns, defoaming agent may be applied to the mold in advance so as to prevent foaming on the intricate and detailed patterns. As the defoaming agent, defoaming agents of silicone series, non-silicone series, and for water emulsions are available. It is preferable, however, to use isoamyl alcohol or Contrasspum® (by Schwegann).

Porous resin products containing continuous holes can be made by casting the above described molding material, then gelling, heating, and completely curing simultaneously with evaporation.

The porous resin products containing continuous holes made from the above described raw material by this casting method have uniform and continuous pores, stable dimensions, high mechanical properties and durability, and are resistant to water. Moreover, it is possible to obtain products of high resistance to chemicals and heat and of high incombustibility by selecting the type of epoxy compound appropriately as described above; to obtain products of accurate pore diameter and porosity by selecting the quantity of added water and the type of filler; and to shorten the manufacturing time by gelling the molding material more rapidly through adequate selection of the hardener so as to improve the heat resistance.

The invention is further illustrated by the following Examples (embodiments) according to the invention and Comparison and Reference Examples.

4

For embodiments 1-11, the raw materials are used in the compounding ratios shown in Table 1.

The epoxy compound and the emulsifier, however, are mixed in advance. In the Table, the epoxy compound A is a mixture of 85 parts by weight of Epikote® 828 (by Oka Shell Epoxy Co.,Ltd.), and 15 parts by weight of Eponitto® (by Nitto Kasei Co.,Ltd.); epoxy compound B is a mixture of 85 parts by weight of Epikote 828 and 15 parts by weight of Epolite® 100MF (by Kyoueisha Yushi Co.,Ltd.); emulsifier A is a mixture of 40 parts by weight of polyoxyethylene oleyl ether and 60 parts by weight of polyoxyethylene sorbitan monooleate; emulsifier B is a mixture of 25 parts by weight of polyoxyethylene oleylether, 60 parts by weight of polyoxyethylene sorbitan monooleate, and 15 parts by weight of sorbitan monooleate; hardener A is an adduct of 50 parts by weight of aliphatic polyamine, 30 parts by weight of glycidyl ether, and 20 parts by weight of polyphenol; hardener B is an adduct of 25 parts by weight of aliphatic polyamine, 30 parts by weight of aromatic polyamine, 25 parts by weight of glycidyl ether, and 20 parts by weight of polyphenol; and hardener C is an adduct of 28 units (parts by weight) of dicyandiamide, 30 units of aliphatic polyamine, 22 units of glycidyl ether, and 20 units of polyphenol. In the aqueous surface active agent, the ratio of surfactant is 5 wt.% (2.5 parts by weight in 50 parts by weight). As the surface active agent, Ftergent 251 is used. The ceramic powder A is 150-75$\mu$m (100-200 mesh) particle size, ceramic powder A-2 is of 60$\mu$m (250 mesh) or smaller particle size, silica sand A is spherical type of 180$\mu$m (80 mesh) particle size, and silica sand B is spherical type of 50$\mu$m (300 mesh) or smaller particle size.

In embodiments 1 to 8 and 11, the porous resin products containing continuous holes are made by the following method. First the hardener is added to the mixture of epoxy compound and emulsifier, then the mixture is stirred fully to form an even emulsion while gradually adding water or aqueous surface active agent. The filler is added to the emulsion, with stirring to form an even mixture which is used as the molding material. The molding material is poured into a polystyrol container 85 x 85 x 50 mm (2mm thick with a projection of 45 mm dia. and 7 mm height on the bottom, heat resistant to 70° C), then the cover of the container is closed after adjusting exactly to 50 mm height with a doctor blade. As shown in Table 1, gelation is complete in 25 to 45 minutes. After confirming the gelation, curing is advanced by heating at 50° C for two hours. After cooling gradually down to room temperature, the partially cured product (which is water-adsorbent) is removed from the mold and then is heated for 3 hours at 80° C for full curing and evaporation to obtain the final porous resin molded product containing continuous holes.

In embodiments 9 and 10, porous products containing continuous holes are obtained in the same manner as for Embodiments 1 to 8 except for the following curing conditions. In Embodiment 9, gelation is carried out at 40° C, curing is advanced by heating for two hours at 60° C, then the article is released from the mold to be heated further for two hours at 80° C and another three hours at 120° C to complete curing. In Embodiment 10, gelation is carried out at 45° C, curing is advanced by heating for three hours at 60° C, then the article is released from the mold to be heated further for one hour at 80° C, another hour at 100° C, still another two hours at 120° C and three hours at 150° C to complete curing.. As shown in Table 1, the time of gelation for Embodiments 1 to 11 in which hardeners A - C are used is very short.

For Comparison Examples 1 and 2, the raw materials are mixed in the compounding ratios shown in Table 2. However, Epikote 828 is used as the epoxy compound, phenylglycidyl ether (PGE, epoxy resin diluent by Nippon Kayaku) as the diluent, the block copolymer of polyoxyethylene and polyoxypropylene as the emulsifier C and D, Newpol® PE 75 (by Sanyo Kasei) as the emulsifier C, Epan® 420 (by Daiichi Kogyo Seiyku) as the emulsifier D, and Adeka® Hardener EH220 (by Asahi Denka Kogyo) as the hardener D respectively.

In both Comparison Examples 1 and 2, the compounded raw materials suffer complete water release, and porous resin molded product containing continuous holes cannot be made.

In the Reference Example, the molded product is made by the following procedure. 100 parts by weight of plaster are added little by little to 75 parts of water at 10° C, then the mixture is stirred for five minutes with an agitator at about 300 rpm. Then the molding material is poured into a container in the same manner as previously described in the Embodiments and hardened for 5 days at normal temperature. The hardened article is used as the molded Reference product.

The products obtained in Embodiments 1 to 11 were checked for such characteristics as rate of water adsorption, shrinkage, average pore diameter, and heat deformation temperature. For the products of Comparison Examples 1 and 2, the measurement was not possible due to complete water release as mentioned above. The measurements were made in the following manner.

(1) Water adsorption

The dents in the bottoms of the molded products were turned upward and 2ml water was put into each dent. The adsorption time of the water was measured.

## (2) Shrinkage

The value given by the following expression was calculated while taking the Reference product as the standard. Shrinkage (%) = (Volume of the molded product of the embodiment/volume of the plaster Reference product) x 100.

## (3) Average pore diameter

A porosimeter was used for the measurement.

## (4) Mechanical strength

By using a die of 100 x 200 x 50 mm, porous resin molded products were made by the methods of Embodiments 1 to 11, and the obtained products were cut into test pieces. The compressive strength was measured with test pieces of 20 x 20 x 20 mm and the bending strength was measured with test pieces of 40 x 40 x 160 mm.

The test results are shown in Table 1. The water adsorption property of the plaster Reference product was 37 seconds.

Table 1 (parts by weight)

| | | | Embodiment 1 | Embodiment 2 | Embodiment 3 | Embodiment 4 | Embodiment 5 | Embodiment 6 | Embodiment 7 | Embodiment 8 | Embodiment 9 | Embodiment 10 | Embodiment 11 |
|---|---|---|---|---|---|---|---|---|---|---|---|---|---|
| Epoxy compound | | A | 100 | 100 | 100 | 100 | 100 | 100 | 100 | — | — | — | 100 |
| | | B | — | — | — | — | — | — | — | 100 | 100 | 100 | — |
| Emulsifier | | A | 6 | 6 | 6 | 6 | 6 | 6 | 6 | — | — | — | 30 |
| | | B | — | — | — | — | — | — | — | 8 | 8 | 8 | — |
| Hardener | | A | 25 | 25 | 25 | 25 | 25 | 25 | 25 | 30 | — | — | 25 |
| | | B | — | — | — | — | — | — | — | — | 30 | — | — |
| | | C | — | — | — | — | — | — | — | — | — | 25 | — |
| Water | | | 50 | 70 | 30 | 50 | — | 50 | — | — | — | — | 60. |
| Water-surface active agent | | | — | — | — | — | 50 | — | 50 | 50 | 50 | 50 | — |
| Filler | Ceramic powder | A | 200 | 200 | 200 | — | — | — | — | — | — | — | — |
| | | A-2 | — | — | — | 200 | — | — | — | — | — | — | — |
| | Silica sand | A | — | — | — | — | 250 | — | 150 | — | — | — | 250 |
| | | B | — | — | — | — | — | 170 | 50 | — | — | — | — |
| | Zircon sand | | — | — | — | — | — | — | — | 500 | 500 | 500 | — |
| Gelation time (Minute) | | | 30 | 45 | 25 | 30 | 30 | 30 | 30 | 25 | 45 | 45 | 45 |
| Water adsorption (sec.) | | | 42 | 33 | 58 | 46 | 32 | 38 | 34 | 45 | 42 | 40 | 35 |
| Shrinkage (%) | | | 99.88 | 100.02 | 99.57 | 99.92 | 99.54 | 100.08 | 99.87 | 100.08 | 99.96 | 99.52 | 98.92 |
| Compressive strength (kg/cm²) | | | 405 | 318 | 586 | 432 | 415 | 462 | 428 | 486 | 542 | 618 | 216 |
| Bending strength (kg/cm²) | | | 83 | 62 | 116 | 91 | 82 | 98 | 85 | 114 | 132 | 156 | 48 |
| Average pore diameter $\mu m$ (micron) | | | 1.05 | 1.57 | 0.43 | 0.62 | 2.15 | 1.24 | 1.56 | 0.85 | 0.88 | 0.92 | 1.32 |
| Heat deflection temp. (°C) | | | 52 | 48 | 54 | 52 | 54 | 53 | 53 | 60 | 98 | 124 | 38.5 |

EP 0 194 757 B1

Table 2 (parts by weight)

| | | Example for Comparison 1 | Example for comparison 2 |
|---|---|---|---|
| Epoxy compound | | 1 0 0 | 1 0 0 |
| Diluent | | 2 0 | 2 0 |
| Emulsifier | C | 1 5 | ——— |
| | D | ——— | 1 5 |
| Hardener D | | 4 8 | 4 8 |
| Water | | 6 0 | 6 0 |
| Silica sand A | | 2 5 0 | 2 5 0 |

From Table 1, it is known that the porous resin molded products containing continuous holes obtained by Embodiments 1 - 11 respectively have excellent mechanical characteristics and dimensional stability. As expoxy compound having polyfunctional groups and heat resistive hardener are used in Embodiments 9 and 10, the products are highly resistive to heat.

A casting mold suitable for slip discharge casting and obtained using a process according to the invention will now be described by way of example only, together with the use of such a mold, with reference to the drawings.

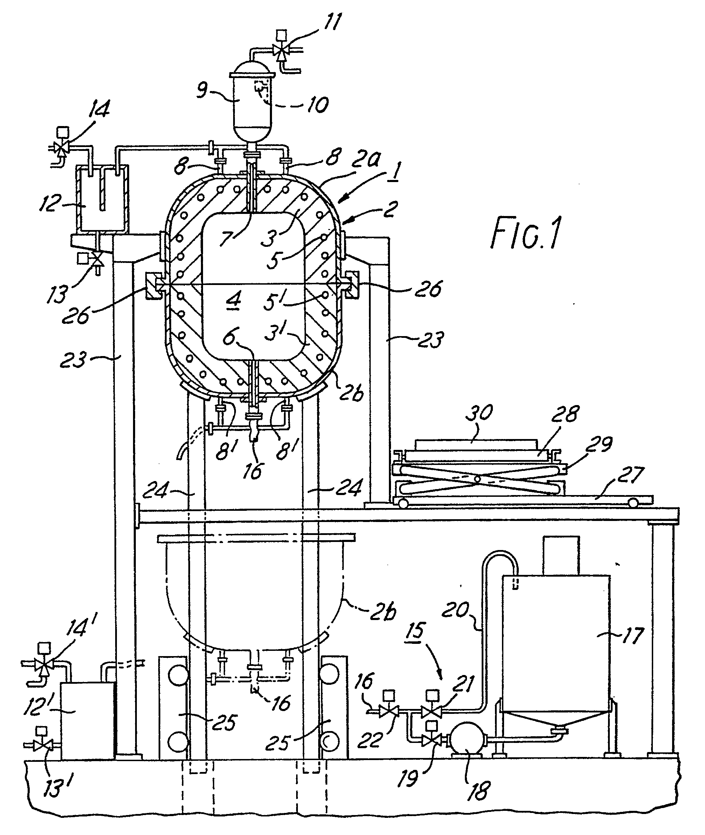

The slip discharge casting process uses slip discharge casting equipment as shown, for example, in Fig.1, and the casting mold of the invention is assembled in the slip discharge casting equipment as described in the following text. As shown in the drawing, the slip discharge casting equipment has a casting mold (1). The casting mold (1) is provided with a pressure resistive container (2) which can be separated into respective upper and lower parts (2a) and (2b). Inner molds (filter layer) (3) (3'), which can be divided into two parts when the pressure resistive container is parted, are provided inside the pressure resistive container (2) so as to form a casting space (4) of a desired shape. Water discharge channels (5) (5') opening at the outside of the pressure resistive container (2) are formed at spaced intervals inside the inner molds (3) (3'). A slip feed pipe (6) and an overflow pipe (7) open at one end into said casting space (4); the other end of the pipes (6)(7) is open to the outside of the pressure resistive container (2). The upper part (2a) of the pressure resistive container is fixed to struts (23, 23). The lower part (2b) is supported by lifting rods (24, 24) and can be moved up and down from an interlock position with part (2a) to the stand-by position (shown by alternate long and two short dashes in the drawing). An up-down driving means (25) drives the lifting rods (24), and a clamp (26) connects the outward flanges of the parts (2a) and (2b) to firmly interlock them. In this embodiment the casting mold (1) is composed of two parts. However, it may also be possible that part (2a) or part (2b) of the pressure container may be divided into two or more parts.

The inner molds (3, 3') are casting molds of the invention. Preferably they are made of a molding material which contains 20-50 parts by weight of hardener per 100 parts by weight of epoxy compound, 30 parts by weight or less of emulsifier and 1-200 parts by weight of water or aqueous surface active agent to 100 parts by weight in total of epoxy compound and hardener, and 30-75 weight percent of filler.

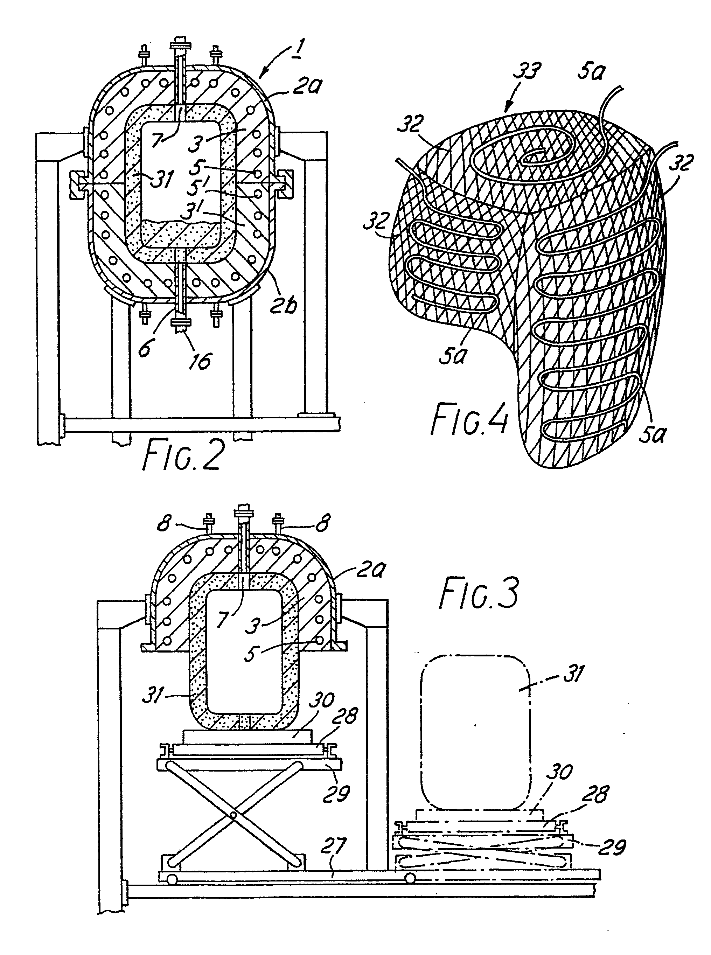

The water discharge channels (5, 5') are made of an extraporous conductor having far smaller water filtration resistance than that of the inner molds (3, 3'). For example, strands of woven cotton of 2 to 20 mm outside diameter may be used as the conductors. The inner molds (3, 3') can be made by the following method. First, a wire net is pressed against the surface of a model mold which is larger than the casting mold by an amount corresponding to the difference in the distance between the surface of the inner molds (3, 3') and the discharge channels (5, 5') (40-100 mm for example) to obtain a wire net (32) corresponding to the shape of the inner molds (3, 3'). (See Fig. 4). Then one or more strands for the discharge channels (5a) are placed onto the wire net (32) at spaced intervals (5 - 100 mm pitch between the strands, for example) and they are fixed to the model mold by means such as wire. A completed molding wire net (33) is fitted into each part (2a) (2b) of the pressure container (2) and the end of the or each strand (5a) is inserted into pipes (8, 8') having openings inside the pressure container (2). Molding material is poured into the gap between the model and the part (2b) and the molding material is cured. When the molding material has cured, part (2a) of the pressure container is interlocked with the part (2b), and molding material is poured between the mold model and part (2a) and cured. Finally, after separating the pressure container (2), the model mold and complete inner molds (3, 3') having the water discharge channels (5, 5') are taken out of the pressure container.

An overflow tank (9) is connected to an overflow pipe (7) and incorporates a liquid level detector (10), and a pipe with a 3-way valve (11) is connected to the top of the overflow tank. The 3-way valve (11) opens to the outside at one end, and the other end is connected to an air compressor (not illustrated). An external pipe (8, 8') is connected to the discharge channel (5, 5') at one end and the other end is connected to an air separator (12, 12'). A drain valve (13, 13') and a 3-way valve (14, 14') are attached to the air separator (12, 12'); one end of the 3-way valve (14, 14') is connected to an air compressor (not illustrated), and the other end is connected to a pressure reducer (not illustrated). The slip feed pipe (6) is connected to the valve (22) of a slip feed and discharge unit (15) by a flexible pipe (16). The flow inlet of a pump (18) is connected to the bottom of a slip tank (17), and a valve (19) connected to the discharge outlet of the pump (18) and a valve (21) attached to a discharged slip return pipe (20) are connected to the valve (22) of the slip feed and discharge unit (15). A cart (27) is provided for carry-out of molded products. It has a table lifter (29) having a carry-out conveyor (28) attached to the surface, and is so composed as to move back and forth from the stand-by position (shown by alternate long and short dashes in Fig. 3) to the receiving position (shown by a continuous line in Fig. 3). A loading base (30) of pallet type is placed on the carryout conveyor (28).

The slip discharge casting system is operated as follows. First the slip is pressurised by the pump (18) and is supplied to the casting space (4) formed by interlocking parts (2a) and (2b) of the pressure container (2) via the valve (19, 22), the flexible pipe (16) and the slip feed pipe (6). While the slip is supplied, the valve (11) is open to the ambient atmosphere. When the supplied slip overflows from the overflow pipe (7) and goes into the overflow tank (9), the liquid level detector (10) functions to stop the pump (18) and to close the valve (22). Then compressed air (e.g. at a pressure of 5-15 kg$^f$/cm$^2$ is supplied to the overflow tank (9) by operating the valve (11) to pressurize the slip in the casting space (4), and the valves (13, 13') are opened to bring the pressure in the air separators (12, 12') to atmospheric pressure, or the valves (13, 13') are closed and the valves (14, 14') are operated to bring the pressure in the air separators (12, 12') to a negative pressure, (e.g. a pressure of 40-93kPa (300-700 mmHg). In this way, the solid matter in the pressurised slip in the casting space (4) is quickly deposited onto the surface of the inner molds (3, 3') and the moisture contained in the slip goes out into the discharge channels (5, 5') at lower pressure through the inner molds (3, 3'). (Refer to Fig. 2). After deposition of the solid slip for a specified time (about 9 minutes for 9 mm thickness for example), the valve (II) is operated to bring the inside of the overflow tank to atmospheric pressure, and the valves (22, 21) are opened to return the extra slip which has not deposited in the casting space (4) to the slip tank (17) through the slip feed pipe (6), the flexible pipe (16) the valves (22, 21) and the slip return pipe (20). After discharging the slip, the valve (22) is closed as required and the valve (11) is operated to supply compressed air to the overflow tank (9), to pressurize the deposited wall of solid slip from inside, and to reduce the moisture content of the deposited wall evenly. While the non-deposited slip is discharged and the deposited wall is again pressurized, the inside of the air separators (12, 12') is kept at atmospheric or negative pressure.

Then with the air separator (12) at negative pressure, the valve (13') is closed, the valve (14') is operated to supply compressed air to the air separator (12'), the residual moisture in the inner mold (3') is pressed out to the boundary between the surface of the inner mold (3') and the deposited wall to form a water film, the part (2b) of the pressure container (2) is lowered and separated from the upper part (2a), and the cast product (31) is held in the inner mold (3) (Fig. 3). The mold cart (27) is moved to a position beneath the cast product (31), and the table lifter (29) is raised so that the loading base (30) is close to the bottom of the cast product (31). By operating the valve (14), compressed air is supplied into the air separator (12) to pressurize the inside of the discharge channel (5) in order to squeeze the residual water in the inner mold (3) out to the boundary between the surface of the inner mold (3) and the cast product (31) to form water film, and to automatically drop the cast product (31) onto the loading base (30). Finally, the table lifter (29) is lowered, the mold cart (27) is retracted to the stand-by position shown by alternate long and two short dashes in Fig. 3, and the hollow cast product (31) on the loading base (30) is removed.

The inner molds of the slip discharge casting system are subject to almost no curing shrinkage and the dimensional stability is excellent. When a casting mold is made by the method described above, therefore, there will be hardly any gap between it and the pressure container and leakage of slip between the inner molds is unlikely. It is also possible to make the size and shape of the casting space exactly the size and shape of a desired molded product. It is, therefore, possible to obtain molded products of high dimensional accuracy. The dimensional accuracy is high even if the molded products have an intricate shape, and the dimensional dispersion can be very small even when the casting mold is used repeatedly. The inner molds can be highly durable, having excellent water resistance, mechanical characteristics, wear resistance and chemical resistance. This makes it possible to make a great number of molded products without the fear of attack by chemicals, dissolution in water, or breakage. As inner molds can be provided with a high heat resistance, breakage by heat can be minimized when slip temperatures are increased. Moreover, the shape and wall thickness of the molded products obtained by slip casting can be homogeneous because the inner molds can be provided with dimensional stability and with even and continuous holes.

In contrast to the present invention, slip casting inner molds made of plaster are inferior in wear resistance, strength, and chemical resistance. When used repeatedly, therefore, wear and corrosion by chemicals are significant and the strength is low. Plaster molds fail to make many products at a high dimensional accuracy, and the maximum number of products which can be molded is only several hundreds of pieces.

When inner molds for slip casting are made by the methods of the previously mentioned Japanese Patent Publication No. 53-2464, No. 51-46131, and No. 55-19723, and Provisional Publication No.59-71339, the dimensional stability is low due to curing shrinkage. Leakage of slip is, therefore, more likely through a gap between inner molds. The size and shape of the casting cannot easily be accurately predetermined so molded products of high dimensional accuracy can not easily be obtained. Breakage due to heat and other causes is also more likely as the heat resistance and durability are inferior to those of the inner molds made according to the invention.

The following description relates to manufacture of a cast product using casting molds of the invention as inner molds.

The formulation at the inner molds of this Example is as follows :

|  | Parts By Weight |
|---|---|
| Resin component: Epoxy resin | 100 |
| Emulsifiers: Sorbitan aliphatic ester | 8 |
| Polyoxyethylene oleyl ether | 8 |
| Polyoxyethyelene sorbitan aliphatic ester | 8 |
| Hardener: Modifield aliphatic polyamine (Hardener A described above). | 30 |
| Filler: Ceramic powder | 220 |
| Water: | 50 |

First, the resin component, hardener, emulsifiers, and water are mixed, then the filler is added. A fluid molding material is prepared by fully mixing the components. A wire net is pressed onto the surface of a model mold which is larger than the casting mold by an amount corresponding to the distance between the surface of the inner molds and the water discharge channels (5, 5') (70 mm) to prepare a wire net of a shape which corresponds to the shape of the inner molds. Then strands of woven cotton of 7 mm outside diameter are placed on the wire net at intervals of 35 mm and are fixed with wire. (See Fig. 4). Wire net is placed inside upper and lower parts of the pressure container, and the discharge channel strands are inserted into the external piping of the pressure container. Then corresponding parts of the model mold are placed in the pressure container and molding material is poured into the gap between the model mold and the lower part of the pressure container, and the temperature is kept at 30-50°C to obtain a suitable level of viscosity and gelation. This condition is maintained for a specified time in order to gel the molding material. Then the hardened material is heated gradually to remove water and emulsifiers (from 35°C to 70°C), and to obtain a porous inner mold. Then molding material is poured into the gap between the model mold and the upper part of the pressure container, the material is cured in the same manner as above, and water and emulsifiers are removed to obtain a porous inner mold. Finally, the pressure container is separated to take out the model mold, and the inner molds having water discharge channels remain in the pressure vessel to provide a casting mold.

When molded products were made by using a slip casting system provided with casting molds according to the invention, the inner molds had excellent dimensional stability, durability, heat resistance and water resistance, which made it possible to manufacture more than 20,000 molded product pieces of high dimensional accuracy continuously and without leakage of the slip.

## Claims

1.  A process for obtaining a porous resin molded product containing continuous holes characterised by using as the molding material a mixture which contains epoxy compound having one or more epoxy groups in each molecule; hardener which reacts with and hardens the epoxy compound; at least two types of nonionic emulsifier selected from the three types having respective hydrophilic-lipophilic balances of 4-8, 8-17, and 11-15.6; water or aqueous surface active agent; and filler.

2.  A process according to claim 1 in which there are used as nonionic emulsifiers at least two of sorbitan aliphatic ester (HLB 4-8), polyoxyethylene oleylether (HLB 8-17), and polyoxyethylene sorbitan aliphatic ester (HLB 11-15.6).

3.  A process according to claim 1 or 2 wherein emulsifier is mixed first with at least one of the epoxy compound and the hardener.

4.  A process according to any preceding claim wherein the filler comprises spherical or nearly spherical particles.

5.  A process according to any preceding claim in which the molding materials include defoaming agent.

6.  A process according to any preceding claim in which the molding material is hardened simultaneously with evaporation by heating to complete curing after gelation of the molding material.

7.  A process according to any preceding claim wherein the HLB of the emulsifier combination used is 13 to 14.5.

8.  A process according to any preceding claim wherein the molding material contains 20 - 50 parts by weight of hardener per 100 parts by weight of epoxy compound, 30 parts by weight or less of emulsifier and 1 - 200 parts by weight of water or aqueous surface active agent to 100 parts by weight in total of epoxy compound and hardener, and 30 - 75 weight percent of filler.

9.  A slip discharge casting mold made of porous resin obtained by a process according to claim 8.

## Revendications

1.  Un procédé pour obtenir un produit moulé de résine poreuse contenant des trous continus, caractérisé par l'utilisation, comme matière à mouler, d'un mélange qui contient un époxyde dont chaque molécule comporte un ou plusieurs groupes époxy ; un durcisseur qui réagit avec l'époxyde et le durcit ; au moins deux types d'émulsionnants non ioniques choisis parmi les trois types ayant des rapports hydrophile-lipophile respectifs de 4 à 8, 8 à 17 et 11 à 15,6 ; de l'eau ou un agent tensioactif aqueux ; et une charge.

2.  Un procédé selon la revendication 1, dans lequel on utilise comme émulsionnants non ioniques au moins deux d'un ester aliphatique de sorbitanne (RHL de 4 à 8), d'un éther oléylique de polyoxyéthylène (RHL de 8 à 17) et d'un ester aliphatique de polyoxyéthylène-sorbitanne (RHL de 11 à 15,6).

3.  Un procédé selon la revendication 1 ou 2, dans lequel on mélange d'abord l'émulsionnant avec l'un au moins de l'époxyde et du durcisseur.

11

**4.** Un procédé selon l'une quelconque des revendications précédentes, dans lequel la charge consiste en particules sphériques ou presque sphériques.

**5.** Un procédé selon l'une quelconque des revendications précédentes, dans lequel les matières à mouler comprennent un agent antimousse.

**6.** Un procédé selon l'une quelconque des revendications précédentes, dans lequel la matière à mouler est durcie tout en subissant une évaporation par chauffage jusqu'à durcissement complet après gélification de la matière à mouler.

**7.** Un procédé selon l'une quelconque des revendications précédentes, dans lequel le RHL de l'association d'émulsionnants employée est de 13 à 14,5.

**8.** Un procédé selon l'une quelconque des revendications précédentes, dans lequel la matière à mouler contient 20 à 50 parties en poids de durcisseur pour 100 parties en poids d'époxyde, 30 parties en poids ou moins d'émulsionnant et 1 à 200 parties en poids d'eau ou d'agent tensio-actif aqueux pour 100 parties en poids au total d'époxyde et de durcisseur, et 30 à 75 pour cent en poids de charge.

**9.** Un moule de coulage-déchargement de barbotine constitué d'une résine poreuse, obtenu par un procédé selon la revendication 8.

**Ansprüche**

**1.** Verfahren zur Herstellung von Formkörpern aus porösem Harz mit zusammenhängenden Löchern, dadurch gekennzeichnet, daß man als Formmaterial eine Mischung verwendet, die eine Epoxyverbindung mit einer oder mehreren Epoxygruppen pro Moleklül, Härter, der mit der Epoxyverbindung reagiert und sie härtet, mintestens zwei Arten von nicht-ionischem Emulgator ausgewählt aus den drei Arten mit hydrophilenlipophilen Gleichgewichten (HLG) von 4-8, 8-17 und 11-15,6, Wasser oder wässriges Tensid und Füllstoff enthält.

**2.** Verfahren nach Anspruch 1 , dadurch gekennzeichnet, daß man als nicht ionische Emulgatoren mindestens zwei Verbindungen aus der Gruppe bestehend aus aliphatischem Sorbitanester (HLG 4-8), Polyoxyethylenoleylether (HLG 8-17) und aliphatischem Polyoxyethylensorbitanester (HLG 11-15,6) verwendet.

**3.** Verfahren nach Anspruch 1 oder 2, dadurch gekennzeichnet, daß man den Emulgator zuerst mit mindestens entweder der Epoxyverbindung oder dem Härter mischt.

**4.** Verfahren nach einem der vorhergehenden Ansprüche, dadurch gekennezeichnet, daß der eingesetzte Füllstoff kugelförmige oder nahezu kugelförmige Teilchen umfaßt.

**5.** Verfahren nach einem der vorhergehenden Ansprüche, dadurch gekennzeichnet, daß das eingesetzte Formmaterial ein Entschäumungsmittel enthält.

**6.** Verfahren nach einem der vorhergehenden Ansprüche, dadurch gekennzeichnet, daß das Formmaterial gleichzeitig mit der Verdampfung durch Erhitzen gehärtet wird, um das Härten nach der Gelierung des Formmaterials zu vervollständigen.

**7.** Verfahren nach einem der vorhergehenden Ansprüche, dadurch gekennzeichnet, daß das HLG der eingesetzten Emulgatorkombination 13 bis 14,5 beträgt.

**8.** Verfahren nach einem der vorhergehenden Ansprüche, dadurch gekennzeichnet, daß man als Formmaterial ein solches einsetzt, das 20-50 Gewichtsteile Härter pro 100 Gewichtsteile Epoxyverbindung, 30 oder weniger Gewichtsteile Emulgator, 1-200 (Gewichtsteile Wasser oder wässriges Tensid zu 100 Gewichtsteilen der Epoxyverbindung und Härter zusammen und 30 - 75 Gewichtsprozent Füllstoff enthält.

9. Schlickerauswurfgießform aus porösem Harz hergestellt nach einem Verfahren gemäß Anspruch 8.

FIG.1

FIG.2

FIG.4

FIG.3